# EUROPEAN PATENT APPLICATION

(11) **EP 4 647 360 A1**
(43) Date of publication of application: **12.11.2025**
(21) Application number: 24753112.2
(22) Date of filing: 22.01.2024
(51) Int. Cl.: B65D 90/32, F17C 3/00, F17C 13/00

(54) **LIQUEFIED HYDROGEN STORAGE TANK**

(30) Priority: 08.02.2023 JP 2023017751
(71) Applicant: KAWASAKI JUKOGYO KABUSHIKI KAISHA, Kobe-shi, Hyogo 650-8670 (JP)
(72) Inventor: YAMAGUCHI, Takahiro, Chuo-ku, Kobe-shi Hyogo 650-8670 (JP); SATO, Takahiro, Chuo-ku, Kobe-shi Hyogo 650-8670 (JP)
(74) Representative: Müller-Boré & Partner Patentanwälte PartG mbB
(86) International application number: PCT/JP2024/001727
(87) International publication number: WO 2024/166666

(57) **Abstract**

A liquefied hydrogen storage tank (1) includes an inner tank (4) including an inner tank roof (43) and an inner tank side plate (42), an intermediate tank (3) including an intermediate tank roof (33) above the inner tank roof (43) and an intermediate tank side plate (32) outside the inner tank side plate (42), an outer tank (2) that houses the intermediate tank (3) inside the outer tank, a heat insulation space (S2) including a roof space part (S21) between the inner tank roof (43) and the intermediate tank roof (33) and a side space part (S22) between the inner tank side plate (42) and the intermediate tank side plate (32), a heat insulation material (56) disposed in the heat insulation space (S2), a communication pipe (45) that penetrates the inner tank roof (43), and a gas passage provided in the roof space part (S21) to allow gas to flow between an upper opening (45a) of the communication pipe (45) and the side space part (S22).

## Description

### Technical Field

The present disclosure relates to a liquefied hydrogen storage tank that stores liquefied hydrogen.

### Background Art

The multiple shell tank shown in Patent Literature 1 described below is known. This multiple shell tank is a flat-bottomed triple shell tank for storing a low-temperature liquefied gas, and includes an inner tank, an intermediate tank, and an outer tank in this order from the inside. An inner heat insulation space (first inter-tank space) between the inner tank and the intermediate tank, and an outer heat insulation space (second inter-tank space) between the intermediate tank and the outer tank are each filled with heat insulation materials such as perlite. In addition, an inner tank roof that constitutes a roof part of the inner tank is provided with a communication pipe that penetrates the inner tank roof.

In Patent Literature 1 described above, the communication pipe that penetrates the inner tank roof causes the space (roof space part) between the inner tank roof and an opposing intermediate tank roof to communicate with the upper part (vapor phase part) inside the inner tank. However, in Patent Literature 1 described above, since the inner heat insulation space between the inner tank and the intermediate tank is filled with a heat insulation material such as perlite, there is a possibility that the difference between the pressure acting on the upper surface of the inner tank roof and the pressure acting on the lower surface of the inner tank roof increases, that is, the vertical differential pressure of the inner tank roof increases, and that the stress caused by the vertical differential pressure may act on the inner tank roof.

### Citation List

### Patent Literature

Patent Literature 1: JP 2022-103917 A

### Summary of Invention

The present disclosure has been made in view of the above circumstances, and an object of the present disclosure is to provide a liquefied hydrogen storage tank that is capable of reducing the vertical differential pressure of the inner tank roof while maintaining the cooled state of the inner tank.

To solve the above problem, a liquefied hydrogen storage tank according to one aspect of the present disclosure is a multiple shell tank for storing liquefied hydrogen, and includes: an inner tank including an inner tank roof and an inner tank side plate to define a storage space for the liquefied hydrogen; an intermediate tank including an intermediate tank roof above the inner tank roof and an intermediate tank side plate outside the inner tank side plate; an outer tank that houses the intermediate tank inside the outer tank; a heat insulation space including a roof space part between the inner tank roof and the intermediate tank roof, and a side space part between the inner tank side plate and the intermediate tank side plate; a heat insulation material disposed in the heat insulation space; a communication pipe that penetrates the inner tank roof; and a gas passage provided in the roof space part to allow gas to flow between an upper opening of the communication pipe and the side space part.

The liquefied hydrogen storage tank of the present disclosure can reduce the vertical differential pressure of the inner tank roof while maintaining the cooled state of the inner tank.

### Brief Description of Drawings

FIG. 1 is a cross-sectional view showing structure of a liquefied hydrogen storage tank according to a first embodiment of the present disclosure.
FIG. 2 is an enlarged cross-sectional view for describing the flow of hydrogen gas in a roof space part.
FIG. 3 is a cross-sectional view for describing a variation of the first embodiment.
FIG. 4 is a cross-sectional view showing structure of a liquefied hydrogen storage tank according to a second embodiment of the present disclosure.
FIG. 5 is a cross-sectional view showing structure of a liquefied hydrogen storage tank according to a third embodiment of the present disclosure.
FIG. 6 is a perspective view for describing a variation of the third embodiment.

### Description of Embodiments

### (1) First Embodiment

### [Overall Configuration of Liquefied Hydrogen Storage Tank]

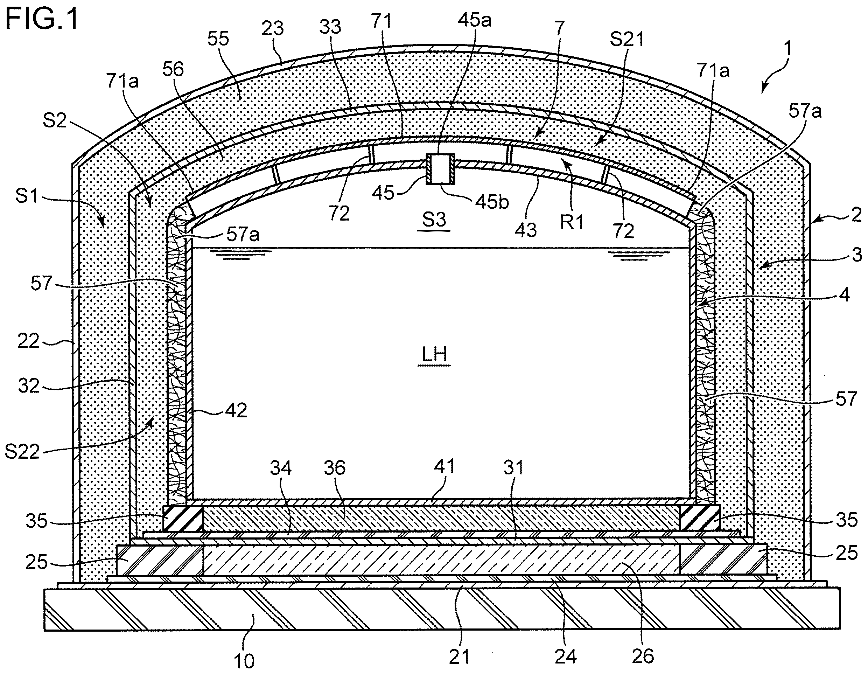

FIG. 1 is a cross-sectional view showing structure of a liquefied hydrogen storage tank 1 according to the first embodiment of the present disclosure. The liquefied hydrogen storage tank 1 shown in this figure is a triple shell tank that stores liquefied hydrogen LH, and includes a tank foundation 10, an outer tank 2 erected on the tank foundation 10, an intermediate tank 3 housed inside the outer tank 2, and an inner tank 4 housed inside the intermediate tank 3. The outer tank 2, the intermediate tank 3, and the inner tank 4 are all formed in a circular shape when viewed from above and are disposed concentrically.

The tank foundation 10 is a concrete layer that constitutes the foundation of the liquefied hydrogen storage tank 1. The tank foundation 10 has a larger size than the outer diameter of the outer tank 2.

The outer tank 2 is a closed body constructed from metal such as carbon steel, and includes an outer tank bottom plate 21, an outer tank side plate 22, and an outer tank roof 23. The outer tank bottom plate 21 is a disc-shaped bottom plate constructed directly on the tank foundation 10. The outer tank side plate 22 is a cylindrical side plate erected from the peripheral edge of the outer tank bottom plate 21. The outer tank roof 23 is a dome-shaped roof that is attached to the upper end of the outer tank side plate 22 to cover the upper opening of the outer tank side plate 22, and is formed in a convex spherical shape on the upper side.

The intermediate tank 3 is a closed body constructed from low-temperature steel such as SUS, and is disposed inside the outer tank 2. The intermediate tank 3 includes an intermediate tank bottom plate 31, an intermediate tank side plate 32, and an intermediate tank roof 33. The intermediate tank bottom plate 31 is a disc-shaped bottom plate with a smaller diameter than the outer tank bottom plate 21. The intermediate tank side plate 32 is a cylindrical side plate erected from the peripheral edge of the intermediate tank bottom plate 31. The intermediate tank roof 33 is a dome-shaped roof that is attached to the upper end of the intermediate tank side plate 32 to cover the upper opening of the intermediate tank side plate 32, and is formed in a convex spherical shape on the upper side.

The inner tank 4 is a tank that defines therein a storage space for the liquefied hydrogen LH. The inner tank 4 is constructed from low-temperature steel such as SUS and is disposed inside the intermediate tank 3. The inner tank 4 includes an inner tank bottom plate 41, an inner tank side plate 42, and an inner tank roof 43. The inner tank bottom plate 41 is a disc-shaped bottom plate with a smaller diameter than the intermediate tank bottom plate 31. The inner tank side plate 42 is a cylindrical side plate erected from the peripheral edge of the inner tank bottom plate 41. The inner tank roof 43 is a dome-shaped roof that is attached to the upper end of the inner tank side plate 42 to cover the upper opening of the inner tank side plate 42, and is formed in a convex spherical shape on the upper side.

A vapor phase space S3 is formed in an inner upper part of the inner tank 4. The vapor phase space S3 is a space filled with a hydrogen gas evaporated from the liquefied hydrogen LH, and is formed between the inner tank roof 43 and the liquid surface of the liquefied hydrogen LH.

Between the outer tank bottom plate 21 and the intermediate tank bottom plate 31, a first level concrete layer 24, a first ring part 25, and a first bottom cold insulation layer 26 are interposed. The first level concrete layer 24 is a leveled concrete layer constructed on the outer tank bottom plate 21. The first ring part 25 is a high-strength ring-shaped concrete layer disposed on the periphery of the first level concrete layer 24. The first bottom cold insulation layer 26 is a layer having heat-insulating properties and disposed on the first level concrete layer 24 inside the first ring part 25.

Between the intermediate tank bottom plate 31 and the inner tank bottom plate 41, a second level concrete layer 34, a second ring part 35, and a second bottom cold insulation layer 36 are interposed. The second level concrete layer 34 is constructed on the intermediate tank bottom plate 31. The second ring part 35 is a high-strength ring-shaped concrete layer disposed on the periphery of the second level concrete layer 34. The second bottom cold insulation layer 36 is a layer having heat-insulating properties and disposed on the second level concrete layer 34 inside the second ring part 35.

Gap of a predetermined width are formed between the inner tank 4 and the intermediate tank 3, and between the intermediate tank 3 and the outer tank 2. Each gap functions as a heat insulation space that suppresses heat transfer from the outside air to the liquefied hydrogen LH. In the following, the gap between the outer tank 2 and the intermediate tank 3 is referred to as an outer heat insulation space S1, and the gap between the inner tank 4 and the intermediate tank 3 is referred to as an inner heat insulation space S2. The inner heat insulation space S2 corresponds to "heat insulation space" in the present disclosure.

The outer heat insulation space S1 between the outer tank 2 and the intermediate tank 3 is filled with an inert gas having a higher boiling point than hydrogen gas, for example, nitrogen gas. A powdered heat insulation material 55 is disposed in the outer heat insulation space S1. The powdered heat insulation material 55 is a heat insulation material having fluidity and including an aggregate of particles such as perlite and glass bubbles.

The inner heat insulation space S2 between the inner tank 4 and the intermediate tank 3 is filled with hydrogen gas. A powdered heat insulation material 56 and a glass wool 57 are disposed in the inner heat insulation space S2. The powdered heat insulation material 56 is a powdered heat insulation material including perlite, glass bubbles, and the like, similar to the above-described powdered heat insulation material 55 inside the outer heat insulation space S1. The glass wool 57 is a cotton-like heat insulation material primarily made of glass fibers.

The inner heat insulation space S2 includes a roof space part S21 and a side space part S22. The roof space part S21 is a dome-shaped space formed between the inner tank roof 43 and the intermediate tank roof 33, while the side space part S22 is a cylindrical space formed between the inner tank side plate 42 and the intermediate tank side plate 32. The powdered heat insulation material 56 is disposed in both the roof space part S21 and the side space part S22, while the glass wool 57 is mainly disposed in the side space part S22. Specifically, the glass wool 57 is disposed along an outer surface of the inner tank side plate 42 to occupy an inner area of the side space part S22. The powdered heat insulation material 56 is disposed in an area excluding the area where the glass wool 57 is disposed and a lower space (gas passage R1) of a partition wall 71, which will be described later, in the inner heat insulation space S2.

A communication pipe 45 is attached to the inner tank roof 43. The communication pipe 45 is a pipe that causes the inner heat insulation space S2 to communicate with the vapor phase space S3 inside the inner tank 4, and is provided to penetrate the central part of the inner tank roof 43 in the thickness direction. The communication pipe 45 includes an upper opening 45a that opens into the inner heat insulation space S2 and a lower opening 45b that opens into the vapor phase space S3. One or more communication pipes 45 can be attached at appropriate positions including the central part of the inner tank roof 43. The present embodiment illustrates the case where one communication pipe 45 is attached at the central part of the inner tank roof 43.

### [Deck and Gas Passage]

A deck 7 that partitions the roof space part S21 vertically is constructed in the roof space part S21. The deck 7 is a structure for limiting the above-described area where the powdered heat insulation material 56 is disposed, and is constructed along an upper surface of the inner tank roof 43.

Specifically, the deck 7 includes a dome-shaped curved partition wall 71 that covers the upper surface of the inner tank roof 43 and support materials 72 that support the partition wall 71 above the inner tank roof 43. The partition wall 71 is disposed with a spacing from both the inner tank roof 43 and the intermediate tank roof 33, and divides the roof space part S21 into two vertical spaces. The support materials 72 are distributed in the radial direction and the circumferential direction.

The partition wall 71 covers substantially the entire upper surface of the inner tank roof 43. The partition wall 71 is made of a material that is impermeable to the powdered heat insulation material 56. Preferably, it is preferable that the partition wall 71 has permeability that is impermeable to the powdered heat insulation material 56 but permeable to gas.

The partition wall 71 described above is supported by the distributed support materials 72 above the inner tank roof 43, thereby forming the gas passage R1 including an open space permeable to gas, below the partition wall 71, that is, between the partition wall 71 and the inner tank roof 43. The gas passage R1 is radially continuous along the inner tank roof 43 from the center thereof to the vicinity of the outer edge. In other words, the gas passage R1 is formed in the lower area of the roof space part S21 that is in contact with the inner tank roof 43.

To enable smooth gas flow through the gas passage R1, the powdered heat insulation material 56 is not disposed in the gas passage R1. That is, the powdered heat insulation material 56 is disposed exclusively above the partition wall 71 in the roof space part S21. The powdered heat insulation material 56 is disposed exclusively outside the glass wool 57 in the side space part S22. In other words, the powdered heat insulation material 56 is disposed exclusively in the outer area of the inner heat insulation space S2 to occupy each of the space above the partition wall 71 and the space outside the glass wool 57.

The radially outer end of the gas passage R1, that is, the ring-shaped opening formed between the outer edges of the partition wall 71 and the inner tank roof 43 is covered with the glass wool 57. That is, the glass wool 57 is disposed cylindrically to cover the entire outer surface of the inner tank side plate 42, and an upper end 57a of the glass wool 57 covers the radially outer end of the gas passage R1. In this way, the upper end 57a of the glass wool 57 that covers the radially outer end of the gas passage R1 functions as a shield to prevent the powdered heat insulation material 56 from flowing into the gas passage R1.

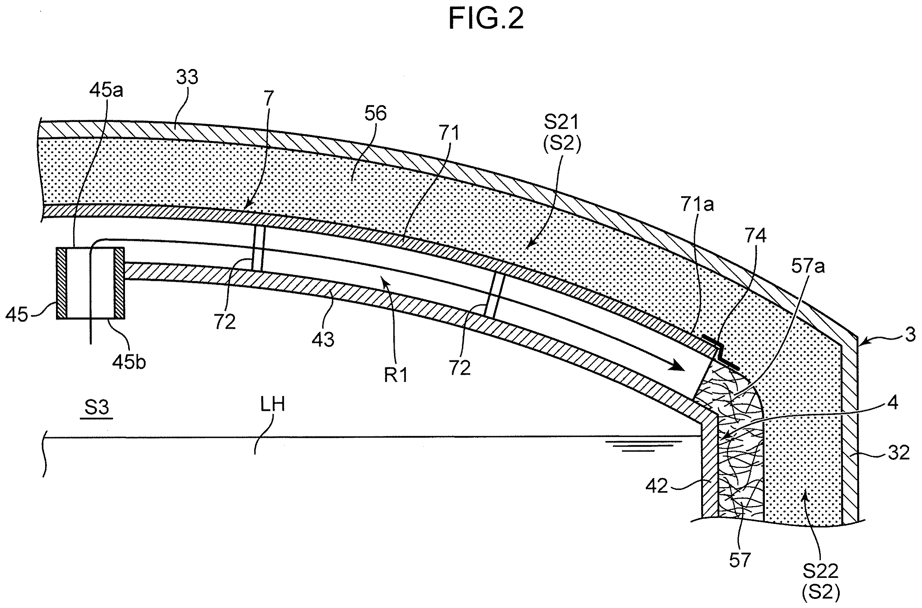

A clamp 74 (FIG. 2) for fixing the upper end 57a of the glass wool 57 is attached to an outer edge 71a of the partition wall 71. The clamp 74 is a flexible band-like body including a glass cloth or the like, and is disposed to extend radially from the outer edge 71a of the partition wall 71 to the upper end 57a of the glass wool 57. A part of the inner side of the clamp 74 is fixed to the outer edge 71a of the partition wall 71 by adhesion or the like, and a part of the outer side of the clamp 74 is fixed to the upper end 57a of the glass wool 57 via an anchor pin or the like, thereby fixing the upper end 57a of the glass wool 57 to a position that covers the radially outer end of the gas passage R1.

The upper opening 45a of the communication pipe 45 opens into the central part of the gas passage R1. This causes the gas passage R1 extending above the inner tank roof 43 from the center thereof to the vicinity of the outer edge, and the vapor phase space S3 below the inner tank roof 43 to communicate with each other via the communication pipe 45. This allows gas to flow between the vapor phase space S3 and the side space part S22. For example, as shown by the dashed arrow in FIG. 2, the hydrogen gas that flows from the vapor phase space S3 through the communication pipe 45 into the roof space part S21 can pass through the gas passage R1 and flow from the upper opening 45a of the communication pipe 45 to the outer edge of the roof space part S21, in other words, to the side space part S22. In other words, the gas passage R1 is provided in the roof space part S21 to allow gas to flow between the upper opening 45a of the communication pipe 45 and the side space part S22.

### [Operational Effects]

As described above, in the present embodiment, the powdered heat insulation material 56 is disposed in the inner heat insulation space S2 between the inner tank 4 and the intermediate tank 3, and the communication pipe 45 that causes the roof space part S21 of the inner heat insulation space S2 to communicate with the vapor phase space S3 in the inner tank 4 is provided in the inner tank roof 43. The gas passage R1 that extends in the radial direction is formed in the roof space part S21 to allow gas to flow between the upper opening 45a of the communication pipe 45 and the side space part S22. Such a configuration has an advantage in that the vertical differential pressure of the inner tank roof 43 can be reduced while the cooled state of the inner tank 4 can be maintained.

That is, in the present embodiment, since the powdered heat insulation material 56 is disposed in the inner heat insulation space S2 between the inner tank 4 and the intermediate tank 3, the heat insulation effect by the powdered heat insulation material 56 can suppress the heat input from the outside to the inner tank 4 and maintain the inner tank 4 at a low temperature.

Since the communication pipe 45 penetrates the inner tank roof 43 and the gas passage R1 is formed in the roof space part S21 between the inner tank roof 43 and the intermediate tank roof 33, for example, when the pressure of the hydrogen gas in the vapor phase space S3 of the inner tank 4 increases, the hydrogen gas can be introduced into the roof space part S21 through the communication pipe 45, and the introduced hydrogen gas can be caused to flow through the gas passage R1 to the outer edge of the roof space part S21 or the side space part S22 (see FIG. 2). Conversely, when the pressure in the vapor phase space S3 decreases, a reverse flow of the hydrogen gas from the roof space part S21 toward the vapor phase space S3 can also be formed. This makes it possible to reduce the vertical differential pressure, which is the difference between the pressure acting on the upper surface of the inner tank roof 43 and the pressure acting on the lower surface of the inner tank roof 43, over a wide range in the radial direction, and to alleviate the stress applied to the inner tank roof 43 by the differential pressure.

For example, if the powdered heat insulation material 56 is disposed throughout the roof space part S21 and the gas passage R1 is closed, the flow of hydrogen gas between the upper opening 45a of the communication pipe 45 and the side space part S22 is hindered by the powdered heat insulation material 56, and as a result, the vertical differential pressure of the inner tank roof 43 easily increases, particularly in the radially outer area. In contrast, according to the present embodiment in which the gas passage R1 is formed to allow gas to flow between the upper opening 45a of the communication pipe 45 and the side space part S22, the increase in the vertical differential pressure of the inner tank roof 43 due to the above-described circumstances can be suppressed, and the stress applied to the inner tank roof 43 can be alleviated.

Specifically, in the present embodiment, the deck 7 including the partition wall 71 that partitions the roof space part S21 vertically is constructed above the inner tank roof 43, the gas passage R1 is formed below the partition wall 71, and the powdered heat insulation material 56 is disposed above. With such a configuration, while using the gas passage R1 below the partition wall 71 and reducing the vertical differential pressure of the inner tank roof 43, the powdered heat insulation material 56 can be stably disposed above the partition wall 71. Since the vapor phase space S3 inside the inner tank 4 and the gas passage R1 located above the vapor phase space S3 with the inner tank roof 43 interposed therebetween are in communication with each other, the vertical differential pressure of the inner tank roof 43 can be effectively reduced, and the stress applied to the inner tank roof 43 can be alleviated.

In the present embodiment, the glass wool 57 is disposed along the inner tank side plate 42, and the upper end 57a of the glass wool 57 blocks the radially outer end of the gas passage R1. With such a configuration, since the inflow of the powdered heat insulation material 56 into the gas passage R1 is prevented by the glass wool 57, the equalization of pressure within the gas passage R1 is not hindered by the powdered heat insulation material 56, allowing the vertical differential pressure of the inner tank roof 43 to be effectively reduced. The combination of the powdered heat insulation material 56 and the glass wool 57 can sufficiently maintain the cooled state of the inner tank side plate 42.

### [Variations]

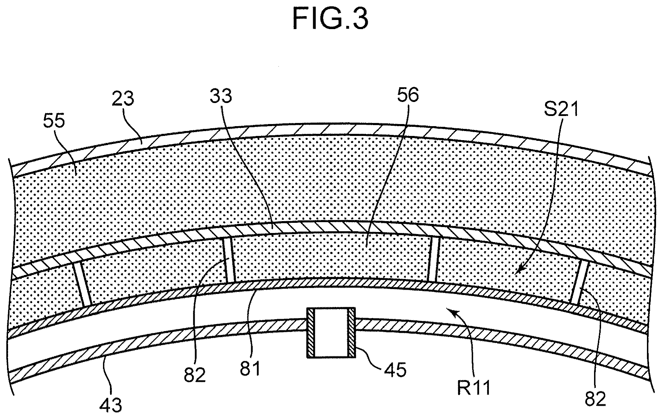

In the first embodiment, the gas passage R1 is formed below the partition wall 71 supported via the support materials 72 above the inner tank roof 43. However, the partition wall that defines the upper surface of the gas passage does not necessarily need to be supported above the inner tank roof 43. One example of changing the support structure of the partition wall is shown in FIG. 3. In the variation shown in FIG. 3, a dome-shaped structure including a partition wall 81 and hanging materials 82 is constructed in the roof space part S21. The partition wall 81 is disposed to partition the roof space part S21 vertically by being fixed to the lower ends of the hanging materials 82 extending from the intermediate tank roof 33. In other words, the partition wall 81 is supported in a suspended state from the lower surface of the intermediate tank roof 33, thereby being disposed at a position distant from both the inner tank roof 43 and the intermediate tank roof 33. The powdered heat insulation material 56 is disposed above the partition wall 81, while the gas passage R11 is formed below the partition wall 81. In a similar manner to the first embodiment, to enable smooth gas flow through the gas passage R11, the powdered heat insulation material 56 is not disposed in the gas passage R11.

In the first embodiment, the glass wool 57, which is a cotton-like heat insulation material, is disposed along the inner tank side plate 42, but the glass wool 57 may be omitted. That is, all of the heat insulation material disposed in the inner heat insulation space S2 may be the powdered heat insulation material 56. In this case, as a shield to prevent the powdered heat insulation material 56 from flowing into the gas passage R1, for example, it is preferable to provide a permeable fence including glass cloth or the like at the radially outer end of the gas passage R1.

In the first embodiment, no heat insulation material is particularly disposed in the gas passage R1, but some relatively gas-permeable heat insulation material, for example, a cotton-like heat insulation material such as the glass wool 57 may be disposed in all or part of the gas passage R1.

### (2) Second Embodiment

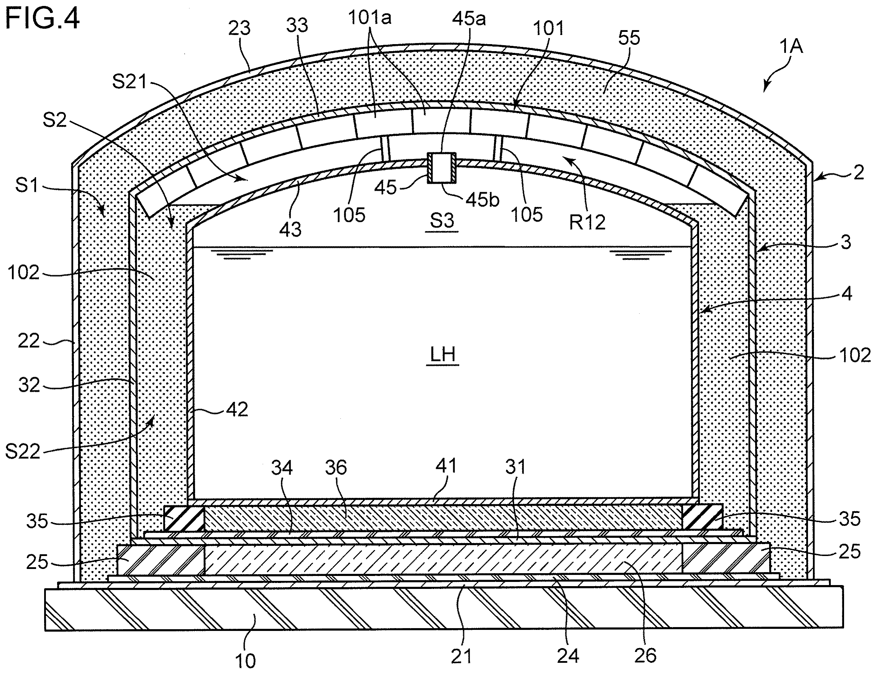

FIG. 4 is a cross-sectional view showing a liquefied hydrogen storage tank 1A according to the second embodiment of the present disclosure. The liquefied hydrogen storage tank 1A of the second embodiment is similar to the liquefied hydrogen storage tank 1 of the first embodiment described above, except for different structure of the heat insulation material and the gas passage inside the inner heat insulation space S2. In FIG. 4, components identical to components of the first embodiment are denoted with the same reference sign and the description thereof will be omitted. Hereinafter, the description will focus on the differences from the first embodiment.

As shown in FIG. 4, in the second embodiment, as heat insulation materials disposed in the inner heat insulation space S2, two types of heat insulation materials are used: a fixed-shape heat insulation material 101 and a powdered heat insulation material 102. The powdered heat insulation material 102 is a powdered heat insulation material including perlite, glass bubbles, and the like, similar to the powdered heat insulation material 56 used in the first embodiment described above. The fixed-shape heat insulation material 101 is a non-flowable heat insulation material having shape-retaining properties. As the fixed-shape heat insulation material 101, for example, a solid heat insulation material including polyurethane or the like can be suitably used. As the fixed-shape heat insulation material 101, it is also possible to use a cotton-like or mat-like heat insulation material including glass wool or the like, or a powdered heat insulation material such as perlite or glass bubbles (microscopic hollow glass spheres) enclosed in a bag.

The fixed-shape heat insulation material 101 is constructed to cover a lower surface of an intermediate tank roof 33. In more detail, the fixed-shape heat insulation material 101 includes element heat insulation materials 101a that are attached to the lower surface of the intermediate tank roof 33. The element heat insulation materials 101a are fixed to the intermediate tank roof 33 by using appropriate fixing means, in a state of being arranged to be adjacent to each other. As a result, substantially the entire lower surface of the intermediate tank roof 33 is covered with the fixed-shape heat insulation material 101.

The height of the fixed-shape heat insulation material 101 is set to be shorter than the distance from an inner tank roof 43 to the intermediate tank roof 33. As a result, a predetermined gap is formed between the bottom surface of the fixed-shape heat insulation material 101 and the inner tank roof 43.

The powdered heat insulation material 102 is mainly disposed in a side space part S22 and is not disposed in most of a roof space part S21. The height of the upper surface of the powdered heat insulation material 102 is set at a position higher than the lower end of the periphery of the fixed-shape heat insulation material 101. As a result, the periphery of the fixed-shape heat insulation material 101 and the upper end of the powdered heat insulation material 102 are disposed to overlap each other.

The fixed-shape heat insulation material 101 and the powdered heat insulation material 102 are disposed in the manner described above, thereby forming a gas passage R12 in the roof space part S21 along the inner tank roof 43 from the center thereof to the vicinity of the outer edge. The presence of such a gas passage R12 allows hydrogen gas to flow between an upper opening 45a of a communication pipe 45 and the side space part S22 (outer edge of the roof space part S21).

A fence 105 is disposed at an intermediate position in the radial direction of the gas passage R12. The fence 105 is a ring-shaped partition that partitions the gas passage R12 in the radial direction and is disposed to surround the communication pipe 45 from the outside. The fence 105 has permeability that is permeable to gas and impermeable to the powdered heat insulation material 102, and includes, for example, materials such as glass cloth.

As described above, in the second embodiment, the gas passage R12 is formed below the fixed-shape heat insulation material 101 disposed along the lower surface of the intermediate tank roof 33. Therefore, while maintaining the cooled state of the inner tank 4 with the fixed-shape heat insulation material 101, the fixed-shape heat insulation material 101 can be used as a wall material that defines the gas passage R12. Since the flow of hydrogen gas through the gas passage R12 reduces the vertical differential pressure of the inner tank roof 43, the stress applied to the inner tank roof 43 by the differential pressure can be alleviated.

In the second embodiment, since the fence 105 surrounding the communication pipe 45 is disposed at an intermediate position of the gas passage R12, the fence 105 can prevent the powdered heat insulation material 102 in the side space part S22 from moving radially inward toward the upper opening 45a of the communication pipe 45, and prevent the powdered heat insulation material 102 from mixing into the inner tank 4 through the communication pipe 45.

### (3) Third Embodiment

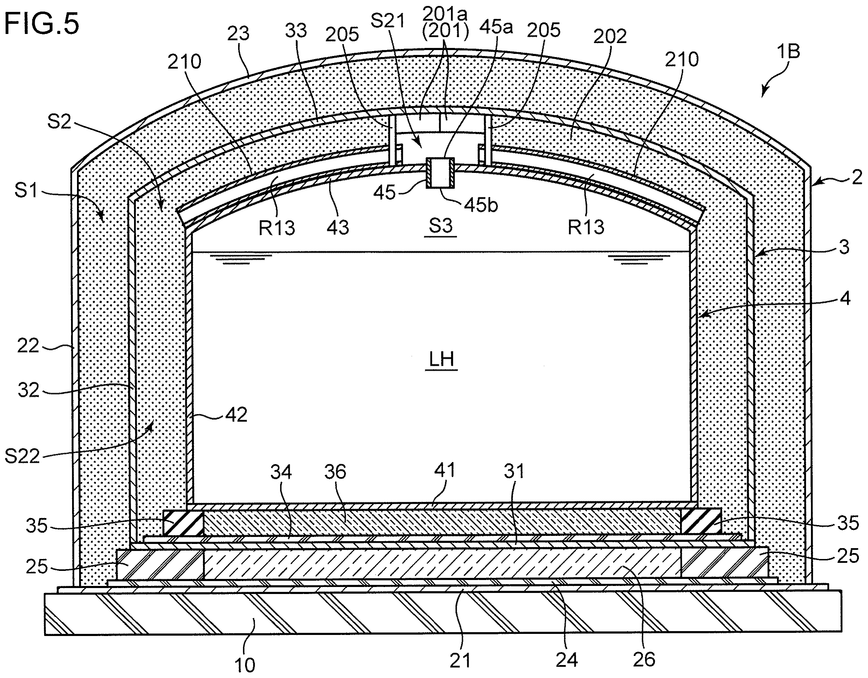

FIG. 5 is a cross-sectional view showing a liquefied hydrogen storage tank 1B according to the third embodiment of the present disclosure. In this figure, components identical to components of the first embodiment are denoted with the same reference sign and the description thereof will be omitted.

As shown in FIG. 5, in the third embodiment, a powdered heat insulation material 202 is disposed in most of an inner heat insulation space S2. The powdered heat insulation material 202 is a powdered heat insulation material including perlite, glass bubbles, and the like, similar to the powdered heat insulation material 56 used in the first embodiment described above.

A fence 205 is disposed in the vicinity of a communication pipe 45 in a roof space part S21. The fence 205 is a ring-shaped partition that partitions the roof space part S21 in the radial direction and is disposed to surround the communication pipe 45 from the outside. The fence 205 has permeability that is permeable to gas and impermeable to the powdered heat insulation material 202, and includes, for example, materials such as glass cloth.

The powdered heat insulation material 202 is disposed to occupy most of the inner heat insulation space S2 excluding the inner area of the fence 205. That is, the powdered heat insulation material 202 is disposed to occupy each of the outer area of the fence 205 in the roof space part S21 and a side space part S22.

A fixed-shape heat insulation material 201 is disposed in the inner area of the fence 205 in the roof space part S21. The fixed-shape heat insulation material 201 is a non-flowable heat insulation material having shape-retaining properties (for example, solid heat insulation material including polyurethane or the like), similar to the fixed-shape heat insulation material 101 used in the second embodiment described above, and includes element heat insulation materials 201a attached to the lower surface of an intermediate tank roof 33.

In the roof space part S21, hollow members 210 extending radially outward in the radial direction from the center of the roof space part. Each of the hollow members 210 is formed to extend from a position in the vicinity of the communication pipe 45 to the side space part S22. An inner end of the hollow member 210 near the communication pipe 45 is disposed in an inner area of the fence 205 where the powdered heat insulation material 202 is not disposed. The hollow member 210 extends radially from the inner area of the fence 205 toward the side space part S22 while penetrating the fence 205.

The cavity inside the hollow member 210 functions as a gas passage R13 through which gas flows. For example, the hydrogen gas flowing from a vapor phase space S3 through the communication pipe 45 to the roof space part S21 can flow through the gas passage R13 from an upper opening 45a of the communication pipe 45 (inner area of the fence 205) to the side space part S22. In other words, in the third embodiment, the gas passage R13, which allows gas to flow between the upper opening 45a of the communication pipe 45 and the side space part S22, is formed by the cavity inside the hollow member 210. Although not shown in the figure, a permeable lid that prevents the powdered heat insulation material 202 from flowing into the gas passage R13 while allowing gas to flow is attached to at least the radially outer end of the hollow member 210.

The shape of the hollow member 210 (gas passage R13) is required at least to be a shape that extends along an inner tank roof 43 from the center thereof to the vicinity of the outer edge, and the specific shape can be set appropriately. For example, the hollow member 210 may be a hollow fan-shaped member whose circumferential width increases toward the radially outer side, or may be a pipe member with a constant diameter.

According to the third embodiment as described above, since the hydrogen gas is allowed to flow between the upper opening 45a of the communication pipe 45 and the side space part S22 through the gas passage R13 inside the hollow member 210, the stress applied to the inner tank roof 43 can be alleviated by reducing the vertical differential pressure of the inner tank roof 43.

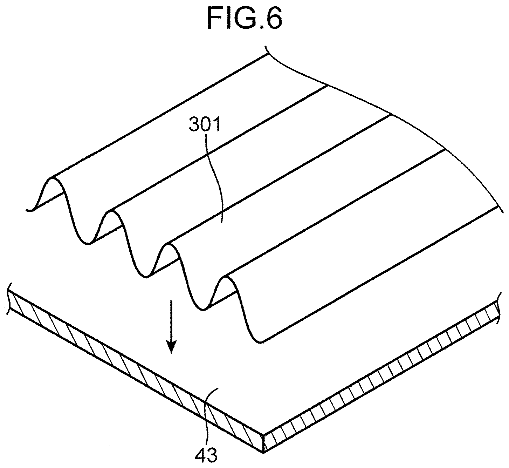

In the third embodiment described above, the cavity inside the radially extending hollow member 210 is formed as the gas passage R13, but a portion of the wall of the gas passage may be configured using the inner tank roof 43. For example, as shown in FIG. 6, by attaching a corrugated plate 301 having a wavy cross section onto the inner tank roof 43, it is also possible to form, as the gas passage, the space sandwiched between the corrugated plate 301 and the inner tank roof 43.

### [Conclusion]

The above embodiments and the variations thereof include the following disclosure.

A liquefied hydrogen storage tank according to a first aspect of the present disclosure is a multiple shell tank for storing liquefied hydrogen, and includes: an inner tank including an inner tank roof and an inner tank side plate to define a storage space for the liquefied hydrogen; an intermediate tank including an intermediate tank roof above the inner tank roof and an intermediate tank side plate outside the inner tank side plate; an outer tank that houses the intermediate tank inside the outer tank; a heat insulation space including a roof space part between the inner tank roof and the intermediate tank roof, and a side space part between the inner tank side plate and the intermediate tank side plate; a heat insulation material disposed in the heat insulation space; a communication pipe that penetrates the inner tank roof; and a gas passage provided in the roof space part to allow gas to flow between an upper opening of the communication pipe and the side space part.

According to the first aspect, since the heat insulation material is disposed in the heat insulation space between the inner tank and the intermediate tank, the heat insulation effect by the heat insulation material can suppress the heat input from the outside to the inner tank and maintain the inner tank at a low temperature.

Since the communication pipe penetrates the inner tank roof and the gas passage is formed in the roof space part between the inner tank roof and the intermediate tank roof, for example, when the pressure of the hydrogen gas in the vapor phase space in the upper part of the inner tank increases, the hydrogen gas can be introduced into the roof space part through the communication pipe, and the introduced hydrogen gas can be caused to flow through the gas passage to the outer edge of the roof space part or the side space part. Conversely, when the pressure in the vapor phase space decreases, a reverse flow of the hydrogen gas from the roof space part toward the vapor phase space can also be formed. This makes it possible to reduce the vertical differential pressure, which is the difference between the pressure acting on the upper surface of the inner tank roof and the pressure acting on the lower surface of the inner tank roof, over a wide range in the radial direction, and to alleviate the stress applied to the inner tank roof by the differential pressure.

In the liquefied hydrogen storage tank according to a second aspect, in the first aspect, the gas passage is formed in a lower area of the roof space part that is in contact with the inner tank roof.

According to the second aspect, since the vapor phase space inside the inner tank and the gas passage located above the vapor phase space with the inner tank roof interposed therebetween are in communication with each other, the vertical differential pressure of the inner tank roof can be effectively reduced, and the stress applied to the inner tank roof can be alleviated.

In the liquefied hydrogen storage tank according to a third aspect, in the second aspect, the gas passage is formed below a partition wall that vertically partitions the roof space part, and the heat insulation material includes a powdered heat insulation material disposed above the partition wall.

According to the third aspect, while using the gas passage formed below the partition wall and reducing the vertical differential pressure of the inner tank roof, the powdered heat insulation material can be stably disposed above the partition wall.

In the liquefied hydrogen storage tank according to a fourth aspect, in the first to third aspect, the heat insulation material includes a powdered heat insulation material disposed in the side space part, and a shield is provided at a radially outer end of the gas passage to prevent the powdered heat insulation material from flowing into the gas passage.

According to the fourth aspect, since the shield prevents the powdered heat insulation material from flowing into the gas passage, the equalization of pressure within the gas passage is not hindered by the powdered heat insulation material, allowing the vertical differential pressure of the inner tank roof to be effectively reduced.

In the liquefied hydrogen storage tank according to a fifth aspect, in the first aspect, the heat insulation material includes a fixed-shape heat insulation material disposed along a lower surface of the intermediate tank roof, and the gas passage is formed below the fixed-shape heat insulation material.

According to the fifth aspect, while the fixed-shape heat insulation material maintains the cooled state of the inner tank, the fixed-shape heat insulation material can be used as a wall material that defines the gas passage.

### Reference Signs

- 1: liquefied hydrogen storage tank
- 2: outer tank
- 3: intermediate tank
- 4: inner tank
- 32: intermediate tank side plate
- 33: intermediate tank roof
- 42: inner tank side plate
- 43: inner tank roof
- 45: communication pipe
- 45a: upper opening (of communication pipe)
- 56: powdered heat insulation material
- 57: glass wool (shield)
- 71, 81: partition wall
- 101: fixed-shape heat insulation material
- S2: inner heat insulation space (heat insulation space)
- S21: roof space part
- S22: side space part
- R1, R11, R12, R13: gas passage

## Claims

1. multiple shell liquefied hydrogen storage tank for storing liquefied hydrogen, the liquefied hydrogen storage tank comprising:
an inner tank including an inner tank roof and an inner tank side plate to define a storage space for the liquefied hydrogen;
an intermediate tank including an intermediate tank roof above the inner tank roof and an intermediate tank side plate outside the inner tank side plate;
an outer tank that houses the intermediate tank inside the outer tank;
a heat insulation space including a roof space part between the inner tank roof and the intermediate tank roof, and a side space part between the inner tank side plate and the intermediate tank side plate;
a heat insulation material disposed in the heat insulation space;
a communication pipe that penetrates the inner tank roof; and
a gas passage provided in the roof space part to allow gas to flow between an upper opening of the communication pipe and the side space part.

2. The liquefied hydrogen storage tank according to claim 1, wherein
the gas passage is formed in a lower area of the roof space part that is in contact with the inner tank roof.

3. The liquefied hydrogen storage tank according to claim 2, wherein
the gas passage is formed below a partition wall that vertically partitions the roof space part, and
the heat insulation material includes a powdered heat insulation material disposed above the partition wall.

4. The liquefied hydrogen storage tank according to claim 1 or 2, wherein
the heat insulation material includes a powdered heat insulation material disposed in the side space part, and
a shield is provided at a radially outer end of the gas passage to prevent the powdered heat insulation material from flowing into the gas passage.

5. The liquefied hydrogen storage tank according to claim 1, wherein
the heat insulation material includes a fixed-shape heat insulation material disposed along a lower surface of the intermediate tank roof, and
the gas passage is formed below the fixed-shape heat insulation material.
